# EUROPÄISCHE PATENTSCHRIFT

(11) **EP 1 835 664 B1**
(45) Veröffentlichungstag und Bekanntmachung des Hinweises auf die Patenterteilung: **19.11.2008**
(21) Anmeldenummer: 06005527.4
(22) Anmeldetag: 17.03.2006
(51) Int. Cl.: H04L 12/413

(54) **Datenübertragung zwischen mehreren Sendern und einem Empfänger**
Data transmission between multiple senders and a receiver
Transmission de données entre plusieurs émetteurs et un récepteur

(43) Veröffentlichungstag der Anmeldung: 19.09.2007
(73) Patentinhaber: Fraunhofer-Gesellschaft zur Förderung der angewandten Forschung e.V., 80686 München (DE)
(72) Erfinder: Müller, Hans-Christian, Dipl.-Ing., 45879 Gelsenkirchen (DE); Greifendorf, Dieter, Dipl.-Phys., 47053 Duisburg (DE); Lörcks, Martin, Dipl.-Ing., 47057 Duisburg (DE); Coers, Alexander, Dipl.-Ing., 44137 Dortmund (DE); Jansen, Andreas, Dipl.-Ing., 45277 Essen (DE); Kokozinski, Rainer, Dr., 46147 Oberhausen (DE); Holzapfel, Markus, Dipl.-Ing., 47057 Duisburg (DE)
(74) Vertreter: Schenk, Markus

(56) Entgegenhaltungen:
- US-B1- 6 246 693
- HUBER J ET AL: "SIMPLE ASYNCHRONOUS MULTIPLEX SYSTEM FOR UNIDIRECTIONAL LOW-DATA-RATE TRANSMISSION" IEEE TRANSACTIONS ON COMMUNICATIONS, IEEE SERVICE CENTER, PISCATAWAY, NJ, US, Bd. 23, Nr. 6, Juni 1975 (1975-06), Seiten 675-679, XP000807976 ISSN: 0090-6778
- PATENT ABSTRACTS OF JAPAN Bd. 1999, Nr. 02, 26. Februar 1999 (1999-02-26) & JP 10 308693 A (OSAKI ELECTRIC CO LTD), 17. November 1998 (1998-11-17)

## Beschreibung

Die vorliegende Erfindung bezieht sich auf die Datenübertragung zwischen mehreren Sendern und einem Empfänger.

Bei jeder Datenübertragung gibt es physikalische Verbindungswege, sogenannte Kanäle, über die einzelne Geräte miteinander kommunizieren. Die Art und Weise, wie die einzelnen Geräte diese Kanäle nutzen und belegen, wird als Kanalzugriffsverfahren bezeichnet und kann unterschiedlich realisiert werden. Die unterschiedlichen Zugriffsverfahren können prinzipiell in zwei Kategorien eingeteilt werden. Bei der ersten Kategorie geschieht der Zugriff auf den Kanal in probabilistischer, bei der zweiten Kategorie in deterministischer Weise. Heute gebräuchliche Zugriffsverfahren, bei denen der Kanalzugriff zeitlich getrennt erfolgt, sind das ALOHA-Verfahren, das CSMA/CD-Verfahren, das Token-Ring- bzw. Token-Bus-Verfahren, sowie das TDMA-Multiplexverfahren.

Das ALOHA-Verfahren beruht darauf, dass jedes Gerät jederzeit auf den Kanal zugreifen und senden darf. Nach jedem Sendevorgang wartet das Gerät auf eine Rückantwort, die auf einem separaten Kanal erfolgt. Senden zwei Geräte gleichzeitig, so kommt es zu einer Datenkollision, so dass die Datenblöcke fehlerhaft sind und somit keine Antwort über den Rückkanal ausgesendet wird. Erhält ein Gerät eine Antwort, so kann es weitere Daten über den Kanal versenden. Erhält das Gerät aufgrund einer Datenkollision keine Antwort, so wartet jedes Gerät eine andere, durch einen Zufallsgenerator generierte Zeit und sendet im Anschluss die Daten noch einmal aus. Zu einer Verbesserung des Datendurchsatzes beim ALOHA-Verfahren führte die Einführung von Zeitschlitzen. Jedes Gerät darf nur noch zu Beginn eines festgelegten Zeitintervalls mit der Übertragung seiner Daten beginnen. Die Synchronisierung aller Geräte erfolgt durch ein hierfür vorgesehenes Gerät, das regelmäßig Zeitpakete versendet, auf die sich alle anderen Geräte synchronisieren.

Das CSMA/CD-Verfahren (Carrier Sense Multiple Access with Collision Detection) wird in den Normen: IEEE 802.3, ISO 8802/3, DIN-ISO 8802-3 beschrieben. Bei diesem Verfahren haben alle Geräte einen gleichberechtigten Zugriff auf den Übertragungskanal. Bevor ein Gerät seine Daten über den Kanal versenden darf, muss es zunächst überprüfen, ob schon eine Datenübertragung auf dem Kanal stattfindet. Erst wenn es feststellt, dass der Kanal frei ist, sendet es seine Daten. Während des Sendevorgangs horcht er weiterhin auf dem Kanal um festzustellen, ob nicht zur gleichen Zeit ein anderer Sender mit einer Datenübertragung begonnen hat und es somit dennoch zu einer Datenkollision kommt.

Stellt ein Sender die Kollision seines Datenpaketes mit einem anderen Datenpaket fest, d.h. erkennt er, dass andere Daten empfangen als von ihm gesendet wurden, so bricht er die Datenübertagung ab und sendet ein JAM-Signal. Dieses Signal stellt sicher, dass alle an einer Datenübertragung beteiligten Sender und Empfänger das Auftreten der Kollision ebenfalls registrieren und die Bearbeitung des aktuellen Datenpaketes abbrechen. Dieses Verfahren findet häufige Anwendung in logischen Busnetzen wie dem Ethernet.

Beim Token-Ring-Verfahren sind die Geräte derart geschaltet, dass sie eine ringförmige Struktur bilden. Sendet kein Gerät Nutzdaten auf dem Kanal, so zirkuliert eine Free-Token-Nachricht im Ring, die einen unbelegten Kanal signalisiert. Sie wird von einem Gerät zum nächsten weitergeleitet. Ein Gerät kann erst dann Daten versenden, wenn es die Free-Token-Nachricht erhält. Es hängt seine Daten an diese Nachricht an, so dass diese nunmehr automatisch zu einer Busy-Token-Nachricht wird. Dieses Datenpaket wird weiterhin von Gerät zu Gerät geleitet, bis sie bei ihrem Empfänger angekommen ist. Das Empfängergerät bestätigt den Empfang des Datenpaketes durch eine Acknowledgement-Nachricht, die wieder mit dem Token auf den Ring geschickt wird und schließlich wieder beim Absender eintrifft. Dieses Gerät sendet nun wieder ein Free-Token auf die Ringleitung. Zur Vermeidung einseitiger Kanalauslastung durch ein einzelnes Gerät wird die Dauer der Sendeberechtigung im allgemeinen begrenzt.

Das Token-Bus-Verfahren wird in der Norm IEEE 802.4 spezifiziert. Bei diesem Verfahren wird der Zugriff auf das Netz ebenfalls durch das Weiterleiten einer Token-Nachricht geregelt. Im Gegensatz zum Token-Ring-Verfahren ist das Netz jedoch nicht in einem Ring angeordnet, sondern in einer Bus- bzw. Baumstruktur aufgebaut, in der allen Geräten Adressen zugeordnet sind, über die sie eindeutig identifiziert werden können. Der Token wird jeweils von einem Gerät zu demjenigen mit der nächst niedrigeren Adresse weitergereicht. Das Gerät der niedrigsten Adresse übergibt den Token dann wieder an das Gerät mit der höchsten Adresse. Anwendung findet dieses Verfahren beispielsweise in der industriellen Automatisierung.

Beim Zeitmultiplexverfahren (Time Division Multiple Access) wird die Sendezeit in Zeitschlitze eingeteilt, die periodisch wiederholt werden. Jeder Verbindung zwischen zwei Geräten wird im Betrieb ein Zeitschlitz zur Datenübertragung zugewiesen. Eine Datenkollision unterschiedlicher Geräte wird aufgrund der Zeitschlitzzuordnung unterbunden.

Obige Zugriffsverfahren, die den fehlerfreien Versand von Datenpaketen gewährleisten, weisen eine Reihe von Nachteilen auf, wie z.B. die Notwendigkeit einer Zeitsynchronisation aller Geräte, damit die Geräte zeitlich getrennt auf einen Kanal zugreifen können, die Notwendigkeit für die Geräte festzustellen, ob ein gegebener Kanal zu einem gegebenen Zeitpunkt frei ist, bzw. in der Lage zu sein, eine Rückmeldung über den ordnungsgemäßen Empfang eines Datenpaketes zu senden bzw. zu empfangen. Der fehlerfreie Versand von Daten erfordert somit entweder ein steuerndes Gerät, welche die Zeitsynchronisation sicherstellt, oder der Sender bzw. der Empfänger benötigen eine zusätzliche Hardware für den Empfang bzw. Senden von Daten. Dies macht die Datenübertragung aufwendig und teuer, denn in beiden Fällen müssen die Geräte über eine Hardware verfügen, die Daten empfangen kann, selbst dann, wenn keine Nutzdaten empfangen, sondern ausschließlich versendet werden sollen.

Verfahren und Vorrichtungen zur Datenübertragung in einem Simplexkanal finden sich beispielsweise in folgenden drei Dokumenten: US 6246693; HUBER J ET AL: "SIMPLE ASYNCHRONOUS MULTIPLEX SYSTEM FOR UNIDIRECTIONAL LOW-DATA-RATE TRANSMISSION" IEEE TRANSACTIONS ON COMMUNICATIONS, IEEE SERVICE CENTER, PISCATAWAY, NJ, US, BD 23, NR. 6, JUNI 1975 (1975-06), SEITEN 675-679 und in JP 10308693.

In US 6246693 wird ein Verfahren beschrieben, bei dem jeder Sender nach dem Senden einer Anfangsnachricht einer gegebenen Länge zu einem zentralen Server die Nachricht mehrfach wiederholt in einem im Voraus bestimmtem Zeitintervall T versendet. Der genaue Sendezeitpunkt der Wiederholung der Anfangsnachricht innerhalb dieses Intervalls T wird dabei stochastisch oder zufällig festgelegt. Die Sendezeitpunkte der Wiederholungen der Anfangsnachricht sind gemäß einer Wahrscheinlichkeitsdichtefunktion bestimmt und bei geeigneter Wahl derselben wird dadurch die Wahrscheinlichkeit eines erfolgreichen Übertragens von Daten erhöht.

In HUBER J ET AL. wird ein Verfahren beschrieben wie man die Anzahl der korrekt erhaltenen Nachrichten maximieren kann. Diese Optimierungsaufgabe wird durch eine geeignete Wahl der Wiederholungsraten als auch eine optimale Strategie der einzelnen Sender gelöst. Ein Ziel des Verfahrens ist dabei einen maximalen Datendurchsatz zu erreichen und nicht wie in dem ersten Dokument die Fehlerrate unter ein akzeptables Niveau zu bringen. Im Weiteren wird im zweiten Dokument auch die Wahrscheinlichkeit bestimmt, mit der eine bestimmte Nachricht beim maximalen Datendurchsatz den Empfänger erreicht. Ebenso wie in dem ersten Dokument, wird auch im zweiten Dokument D2 eine stochastische Verteilung der wiederholten Versendung ein und desselben Datenpakets gewählt.

In JP 10308693 wird ebenfalls ein Verfahren beschrieben, bei dem ein wiederholtes Versenden eines Datenpaketes vorgenommen wird, wobei die Wiederholungen ebenfalls stochastisch ermittelt werden.

Es ist die Aufgabe der vorliegenden Erfindung, ein Verfahren und eine Vorrichtung zur Datenübertragung zwischen mehreren Sendern und einem Empfänger zu schaffen, so dass eine sichere Datenübertragung mit weniger Aufwand realisiert werden kann.

Diese Aufgabe wird durch ein Verfahren gemäß Anspruch 1 und eine Vorrichtung gemäß Anspruch 3 gelöst.

Der vorliegenden Erfindung liegt die Erkenntnis zugrunde, dass ein Verfahren und eine Vorrichtung die oben beschriebenen Nachteile der bestehenden Technik vermeidet, wenn jeder Sender ein gegebenes Datenpaket wiederholt versendet, allerdings mit bzw. in einer für jeden Sender spezifischen Kennung, d.h. Muster oder zeitlichen Sequenz. Wenn die zeitliche Sequenz geeignet gewählt wird und darüber hinaus die Anzahl der Wiederholung mindestens der Anzahl der Sender entspricht, kann damit sichergestellt werden, dass der Empfänger von jedem Sender innerhalb einer Zeitspanne zumindest ein Datenpaket erhält, welches nicht von einem anderen Sender gestört wird. Anders ausgedrückt erreicht für jeden Sender zumindest eines der wiederholt übertragenden Versionen des Datenpaketes dieses Senders den Empfänger ohne Überlagerung bzw. Störung durch die wiederholt übertragenen Versionen der Datenpakete des/der anderen Sender.

Ein bevorzugtes Ausführungsbeispiel der vorliegenden Erfindung nimmt Bezug auf die beiliegenden Zeichnungen. Es zeigen:
- Fig. 1: ein Blockschaltbild einer exemplarischen Anordnung aus drei Sendern und einem Empfänger, in welcher die vorliegende Erfindung implementierbar ist; und
- Fig. 2: Graphen zur Veranschaulichung des Datenübertragungsschemas in der Anordnung gemäß Fig. 1 gemäß einem Ausführungsbeispieles der vorliegenden Erfindung.

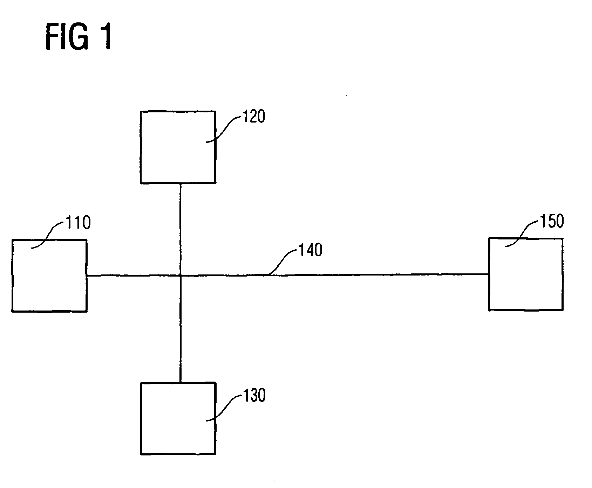

Fig. 1 zeigt eine exemplarische Anordnung aus einem ersten Sender 110, einem zweiten Sender 120 und einem dritten Sender 130, die über einem gemeinsamen Übertragungskanal 140 mit einem Empfänger 150 gekoppelt sind, um an denselben Daten zu übertragen, wobei der gemeinsame Übertragungskanal 140 beispielsweise eine Leitung oder ein drahtloser Übertragungskanal ist. Im letztgenannten Fall werden die Daten über den Übertragungskanal 140 beispielsweise mit Hilfe elektro-magnetischer Wellen, wie z.B. Funkwellen oder Schallwellen, wie z.B. Ultraschallwellen, mit einer bestimmten Frequenz, d.h. in einem Kanal, zum Empfänger übertragen. Die gemeinsame Datenstrecke 140 ist dabei so beschaffen, dass ein gleichzeitiges Eintreffen von ausgesendeten Daten von unterschiedlichen der Sender 110 - 130 an dem Empfänger 150 zu einer gegenseitigen Störung bzw. einer Störung des Empfangs dieser Daten führen kann, so dass in diesem Fall der Empfänger die Daten keines der Sender korrekt empfängt, oder der Empfang nur unter erhöhten Aufwand möglich wäre.

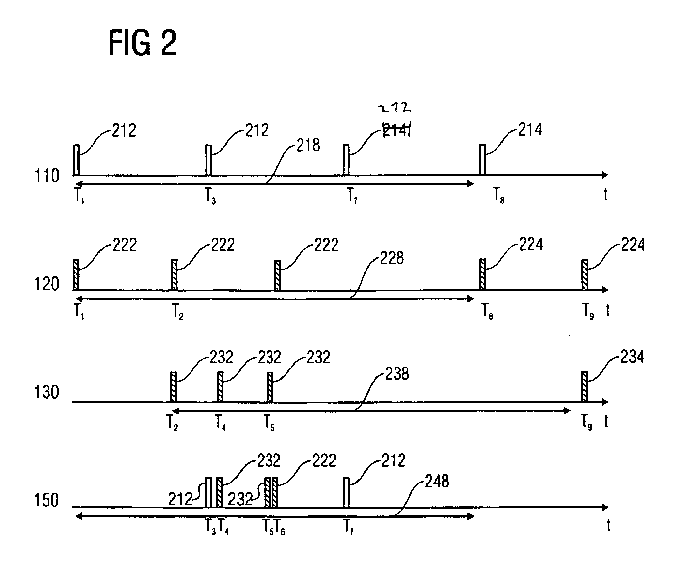

Im Folgenden wird anhand von Fig. 2 das Datenübertragungsschema in der Anordnung von Fig. 1 näher erläutert, welches im Folgenden auch als Nonius-Verfahren bezeichnet wird. Mit diesem Nonius-Verfahren besteht, wie es die nachfolgende Erörterung zeigen wird, die Möglichkeit, eine sichere Datenübertragung der Sendegeräte 110 - 130 zu dem Empfangsgerät 150 zu gewährleisten, auch ohne dass diese Sendegeräte 110 - 130 synchronisiert wären. Insbesondere ist auf Senderseite keine Hardware erforderlich, die für den Empfang von Daten benötigt wird, wie z. B. Bestätigungsnachrichten oder dergleichen.

Bevor jedoch anhand von Fig. 2 ein spezielles Szenario der Übertragung von Daten von den Sendern 110 - 130 zu dem Empfänger 150 beschrieben wird, wird im Folgenden das Nonius-Verfahren im Allgemeinen kurz skizziert. Bei dem Nonius-Verfahren überträgt jedes Sendegerät 110 - 130 seine zu sendenden Datenpakete in einem für den jeweiligen Sender 110 - 130 festgelegten Muster. Diese Muster werden in der späteren Erläuterung der Fig. 2 näher veranschaulicht und umfassen ein wiederholtes Übertragen ein und desselben Datenpaketes in einer bestimmten Sequenz bzw. Kennung mit einer bestimmten Sequenzdauer, woraufhin in einer nächsten Sequenz ein nächstes Datenpaket übertragen wird. Während des Versands eines Musters werden also stets die gleichen Nutzdaten versendet. Ist das Aussenden der Mustersequenz beendet, so wird die Mustersequenz mit den nächsten Nutzdaten wiederholt. Bei dem Ausführungsbeispiel von Fig. 2 sind die Muster dabei so festgelegt, dass die Mustersequenzen bzw. die Folgen von Zeitabständen zwischen Datenübertragungen für alle Sender unterschiedlich sind. Die Dauer einer Mustersequenz ist bei allen Sendern bei dem nachfolgend beschriebenen speziellen Ausführungsbeispiel von Fig. 2 gleich. Die Mustersequenz wird als Sendefenster bezeichnet und kennzeichnet den Zeitraum, innerhalb dessen von jedem Sender 110 - 130 mindestens ein Paket den Empfänger 150 erreicht, ohne eine Kollision mit einem anderen Senderpaket erfahren zu haben.

In Fig. 2 ist exemplarisch ein Szenario gezeigt, bei dem die Sender 110 - 130 jeweils ein Datenpaket an den Empfänger 150 senden wollen. Dabei zeigt der oberste Graph den zeitlichen Verlauf des Sendeverhaltens des Senders 110, der zweite Graph von oben den zeitlichen Verlauf des Sendeverhaltens des Senders 120, der dritte Graph von oben den zeitlichen Verlauf des Sendeverhaltens des Senders 130 und schließlich der vierte Graph den zeitlichen Verlauf der Ankunft ungestörter Datenpakete bei dem Empfänger 150, d. h. das Eintreffen individueller Datenpakete von den Sendern 110 - 130 ohne das gleichzeitige Eintreffen eines anderen Datenpaketes. Entlang der horizontalen Achse ist jeweils die Zeit t aufgetragen. Es wird darauf hingewiesen, dass bei Fig. 2 zum bessern Verständnis die Laufzeitdauern vernachlässigt wurden, wobei sich jedoch die nachfolgende Beschreibung ohne weiteres auch auf den Fall unterschiedlicher Laufzeitdauern übertragen lässt.

Gemäß dem Beispiel von Fig. 2 übertragen die Sender 110 - 130 exemplarisch Datenpakete der Länge 50 ms. Die Sender 110 - 130 senden die Datenpakete in vorbestimmten Mustern, um vorliegend exemplarisch sicherzustellen, dass innerhalb einer Zeitspanne von sechs Sekunden von jedem Sender 110 - 130 mindestens ein Datenpaket ohne Zerstörung durch einen anderen Sender übermittelt wird.

Dazu senden die Sender 110 - 130 ihre Datenpakete wiederholt mit Zeitabständen zwischen den einzelnen Wiederholungen bzw. Sendevorgängen, die in Fig. 2 exemplarisch für die einzelnen Sender 110 - 130 wie folgt und wie in Fig. 2 gezeigt ausgewählt sind. Der Sender 110 beispielsweise sendet ein aktuelles Datenpaket 212 zu einem Zeitpunkt T₁ und wiederholt die Übertragung dieses Datenpakets 212 zu einem Zeitpunkt T₃ mit einem zeitlichem Abstand von exemplarisch zwei Sekunden und daraufhin abermals zu einem Zeitpunkt T₇ mit ebenfalls einem zeitlichen Abstand von zwei Sekunden. Die Übertragung des nächsten Datenpakets 214 nimmt der Sender 110 zu einem Zeitpunkt T₈ vor, der insgesamt hier exemplarisch sechs Sekunden nach der erstmaligen Übertragung des vorhergehenden Datenpakets 212 zum Zeitpunkt T₁ liegt.

Obwohl es in Fig. 2 nicht gezeigt ist, wiederholt der Sender 110 auch die Übertragung des Datenpakets 214 zweimal mit einem Abstand zwischen den Wiederholungen von exemplarisch zwei Sekunden, um die Übertragung des wiederum nächsten Datenpakets zwölf Sekunden nach dem Zeitpunkt T₁ vorzunehmen usw. Folglich sendet der Sender 110 aufeinander folgende Datenpakete 212, 214 in Mustersequenzen der Länge sechs Sekunden aus, wobei die Zeitdauer zwischen den Übertragungen ein und desselben Datenpakets 212 jeweils zwei Sekunden beträgt und die Zeitdauer der letzten Übertragung dieses Datenpakets zu der ersten Übertragung des nächsten Datenpakets 214 ebenfalls zwei Sekunden beträgt.

Dementsprechend sendet der Sender 120 seine Datenpakete 222 und 224 ebenfalls in einer vorbestimmten Mustersequenz aus, bei der jedoch die zeitlichen Abstände zwischen den Übertragungen ein und desselben Datenpakets 222 jeweils 1,5 Sekunden und der zeitliche Abstand für die letzte wiederholte Übertragung dieses Datenpakets 222 zu der Übertragung des nächsten Datenpakets 224 drei Sekunden beträgt, so dass die Mustersequenzlänge des Senders 120 ebenfalls insgesamt sechs Sekunden beträgt. Exemplarisch sind die Mustersequenzen der Sender 110 und 120 in Fig. 2 zueinander synchronisiert dargestellt, derart, dass die erstmalige Übertragung des Datenpakets 212 bzw. 222 der beiden Sender zum gleichen Zeitpunkt, nämlich zum Zeitpunkt T₁, stattfindet, wobei jedoch dies, wie es anhand des Senders 130 deutlich wird, nicht notwendig ist.

Der Sender 130 sendet seine Folge von Datenpaketen 232 und 234 ebenfalls in einer vorbestimmten Mustersequenz der Dauer von sechs Sekunden. Die Mustersequenzen liegen jedoch phasenverschoben zu denjenigen der Sender 110 und 120. Exemplarisch ist in Fig. 2 der Fall dargestellt, dass der Sender 130 die Übertragung des Datenpakets 232 das erste Mal zum Zeitpunkt T₂ vornimmt. Seine Mustersequenz ist derart beschaffen, dass die Zeitdauer zwischen den Übertragungen ein und desselben Datenpakets 232 jeweils 0,7 Sekunden beträgt, während der zeitliche Abstand zwischen der letztmaligen Übertragung dieses Datenpakets und der Datenübertragung des nächsten Datenpakets 234 4,6 Sekunden beträgt.

Wie es durch gemeinsame Betrachtung der oberen drei Graphen ersichtlich wird, finden einige der Datenübertragungen der Datenpakete 212 - 234 durch die unterschiedlichen Sender 110 - 130 zu gleichen Zeitpunkten statt, was zu einem gestörten Empfang beim Empfänger 150 führen kann, wie z. B. die Übertragung der Datenpakete 212, 222 zu dem Zeitpunkt T₁ sowie die Übertragung der Datenpakete 214, 224 zu dem Zeitpunkt T₈ und des Datenpakets 224 bzw. 234 zu dem Zeitpunkt T₉ sowie der Datenpakete 222, 232 zum Zeitpunkt T₂. Insgesamt sind die Zeitabstände zwischen den Übertragungen bzw. die Mustersequenzen jedoch so gewählt, dass selbst bei beliebiger Wahl des Zeitpunktes, zu dem jeder Sender 110 - 130 mit seiner Mustersequenz 218, 228 bzw. 238 beginnt, zwei Pakete durch je einen Nachbarsender zwar gestört werden können, zumindest aber eines der drei Pakete dann immer noch derart versetzt liegt, dass es von keinem Datenpaket eines der anderen Sender gestört wird. Dies wird ersichtlich, wenn man die Abstände der Datenpaketsendezeitpunkte betrachtet. Diese unterscheiden sich stets mindestens um 100 ms zwischen den verschiedenen Sendern. Während also der Startzeitpunkt der Sequenzen 218 und 228 also zufällig gerade so liegt, dass das erste Paket 222 des zweiten Senders 120 und das erste Paket 212 des ersten Senders 210 sich zu dem Zeitpunkt T₁ stören, und die Sequenzen 228 und 238 gerade so liegen, dass sich die Übertragung der Datenpakete 222 und 232 zu dem Zeitpunkt T₂ stört, liegt wenigstens das dritte Paket in der Sequenz 228 zum Zeitpunkt T₆ so, dass keiner der Sender 110 oder 130 dasselbe ebenfalls stören kann. Dies trifft für beliebige Startzeiten für alle Sender 110 - 130 zu.

Schließlich führen die exemplarischen relativen Lagen der Mustersequenzen der Sender 110 - 130 in dem Fall von Fig. 2 dazu, dass sich am Empfänger 150 ein ungestörter Empfang des Datenpaketes 212 zu den Zeitpunkten T₃ und T₇ ergibt, wobei das Datenpaket 212 zweimal ungestört eintrifft, nämlich zu T₃ und T₇, das Datenpaket 232 ebenfalls zweimal ungestört eintrifft, nämlich zu den Zeitpunkten T₄ und T₅, und das Datenpaket 222 wenigstens einmal ungestört eintrifft, nämlich zum Zeitpunkt T₆. Die Datenpakete 214, 224 und 234 treffen zwar ebenfalls wenigstens einmal ungestört am Empfänger 150 ein, jedoch ist dies in Fig. 2 auf der Zeitachse nicht mehr dargestellt.

Bei den obigen Ausführungsbeispielen von Fig. 1 und 2 entsprach die Anzahl der versendeten Pakete pro Mustersequenz der Anzahl der Sender in der Anordnung bzw. dem System. Die Anzahl kann jedoch auch höher liegen. Auf diese Weise ist gewährleistet, dass die Pakete eines Senders nicht trotz fehlender Synchronisierung durch Pakete anderer Sender gestört werden. Die Anzahl der gesendeten Pakete pro Mustersequenz kann natürlich auch bei allen Sendern verschieden sein.

Ferner ist es nicht unbedingt notwendig, dass die Zeitabstände zwischen den wiederholten Übertragungen ein und desselben Datenpakets innerhalb einer Mustersequenz zueinander gleich sind, wie es im Vorhergehenden beschrieben worden ist. Vielmehr könnten die Zeitabstände zwischen diesen wiederholten Übertragungen auch unterschiedlich sein, wie z. B. T₃-T₁ # T₇-T₃. Eine Kollision trotz fehlender Synchronisierung zwischen den Sendern 110 - 130 könnte in diesem Fall allgemein dadurch vermieden werden, dass die Mustersequenzen derart ausgewählt werden, dass unabhängig von der Synchronisation der Sender zwischen jedem Paar von Sendern höchstens eine Datenübertragung mit einer Datenübertragung eines der anderen Sender kollidiert.

Ferner wird darauf hingewiesen, dass die Anzahl der Sender bei dem Ausführungsbeispiel von Fig. 1 und 2 lediglich exemplarisch bei drei lag. Die vorliegende Erfindung ist natürlich auch bei lediglich zwei oder mehr als drei Sendern anwendbar und vorteilhaft.

Zusammenfassend liefert das obige Ausführungsbeispiel eine Möglichkeit für eine Implementierung eines Zugriffsverfahrens, das verwendet werden kann, wenn Datenübertragungen zwischen mehreren Geräten stattfinden und diese stets hin zu einem einzelnen Gerät gerichtet sind. Das Nonius-Verfahren stellt sicher, dass das empfangende Gerät innerhalb einer Zeitspanne von jedem Sender eine Nachricht erhält, ohne dass diese von einem anderen Sender des Systems gestört wird. Die sendenden Geräte benötigen keine Empfangseinheit und müssen nicht zeitlich synchronisiert sein. Das Nonius-Verfahren ist für Anwendungen geeignet, bei denen der Datenfluss von einigen Sendern lediglich hin zu einem Empfänger erfolgt. Durch das Nonius-Verfahren wird auf der Senderseite keine Hardware benötigt, die für den Empfang von Daten erforderlich ist. Die Sender müssen nicht den Belegungsstatus des Kanals 140 detektieren können und es ist keine Zeitsynchronisierung der Systemgeräte notwendig, um zu gewährleisten, dass innerhalb eines Sendefensters mindestens ein Paket eines jeden Senders den Empfänger erreicht. In Fig. 2 ist dieses Sendefenster, in dem der Empfänger 150 zumindest von jedem Sender ein Datenpaket störungsfrei erhält, exemplarisch T_{sendefenster} = 6s lang gewesen, und ist in Fig. 2 mit 248 angezeigt.

Insbesondere wird darauf hingewiesen, dass abhängig von den Gegebenheiten das erfindungsgemäße Schema auch in Software implementiert sein kann. Die Implementierung kann auf einem digitalen Speichermedium, insbesondere einer Diskette oder einer CD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner abläuft. In anderen Worten ausgedrückt kann die Erfindung somit als ein Computerprogramm mit einem Programmcode zur Durchführung des Verfahrens realisiert werden, wenn das Computerprogramm auf einem Computer abläuft.

## Patentansprüche

1. Verfahren zur Datenübertragung zwischen wenigstens zwei Sendern und einem Empfänger, mit folgenden Schritten:
a) mehrmaliges Übertragen eines ersten Datenpaketes (212) von einem ersten (110) der Sender zu dem Empfänger (150) in einer ersten Sequenz (218), die die Anzahl von Malen n der Übertragungen des ersten Datenpaketes sowie eine erste Folge von Zeitabständen zwischen den Übertragungen des ersten Datenpaketes festlegt;
b) mehrmaliges Übertragen eines zweiten Datenpaketes (222) von einem zweiten (220) der Sender zu dem Empfänge (150) in einer zweiten Sequenz (228), die die Anzahl von Malen m der Übertragungen des zweiten Datenpaketes sowie eine zweite Folge von Zeitabständen zwischen den Übertragungen des zweiten Datenpaketes festlegt;
c) Übertragen weiterer Datenpakete mit einer ersten Wiederholzeitdauer unter Verwendung der ersten Sequenz (218); und
d) Übertragen weiterer Datenpakete mit einer zweiten Wiederholzeitdauer unter Verwendung der zweiten Sequenz (228),
wobei n und m gleich oder größer der Anzahl der Sender sind und die erste und die zweite Sequenz unterschiedlich zueinander sind und derart ausgewählt sind, dass unabhängig von der Synchronisation der Sender zumindest eines der n bzw. m Datenpakete nicht von einem der Datenpakete der anderen Sender gestört wird, wobei die erste und zweite Wiederholzeitdauer gleich sind.

2. Verfahren gemäß Anspruch 1, wobei
die Anzahl n der Wiederholungen in der ersten und die Anzahl m der Wiederholungen in der zweiten Sequenz gleich ist.

3. Vorrichtung zur Datenübertragung zu einem Empfänger (150), mit:
einem ersten Sender (110), der ausgebildet ist, um ein erstes Datenpaket (212) zu dem Empfänger (150) in einer ersten Sequenz (218), die die Anzahl von Malen n der Übertragungen des ersten Datenpaketes (212) sowie eine erste Folge von Zeitabständen zwischen den Übertragungen des ersten Datenpaketes festlegt, zu übertragen, und weitere Datenpakete mit einer ersten Wiederholzeitdauer unter Verwendung der ersten Sequenz (218) zu übertragen; und
einem zweiten Sender (120), der ausgebildet ist, um ein zweites Datenpaket (222) zu dem Empfänger (150) in einer zweiten Sequenz (228) die die Anzahl von Malen m der Übertragungen des zweiten Datenpaketes (222) sowie eine zweite Folge von Zeitabständen zwischen den Übertragungen des zweiten Datenpaketes festlegt, zu übertragen, und weitere Datenpakete mit einer zweiten Wiederholzeitdauer unter Verwendung der zweiten Sequenz (228) zu übertragen,
wobei n und m gleich oder größer der Anzahl der Sender ist und die erste und die zweite Sequenz unterschiedlich zueinander sind und derart ausgewählt sind, dass unabhängig von der Synchronisation der Sender zumindest eines der n bzw. m Datenpakete nicht von einem der Datenpakete der anderen Sender gestört wird, wobei die erste und die zweite Wiederholzeitdauer gleich sind.

4. Vorrichtung gemäß Anspruch 3, bei der der erste und zweite Sender so ausgebildet sind, dass die Anzahl n der Wiederholungen in der ersten und die Anzahl m der Wiederholungen in der zweiten Sequenz gleich ist.

5. Computerprogramm mit einem Programmcode zur Durchführung aller Schritte des Verfahrens gemäß Anspruch 1, wenn das Computerprogramm auf einem Computer abläuft.

## Claims

1. Method for transferring data between at least two transmitters and one receiver, comprising:
a) transferring a first data packet (212) several times from a first one (110) of the transmitters to the receiver (150) in a first sequence (218) defining the number of times n of the transfers of the first data packet as well as a first series of time intervals between the transfers of the first data packet;
b) transferring a second data packet (222) several times from a second one (120) of the transmitters to the receiver (150) in a second sequence (228) defining the number of times m of the transfers of the second data packet as well as a second series of time intervals between the transfers of the second data packet;
c) transferring further data packets with a first repeat period, using the first sequence (218); and
d) transferring further data packets with a second repeat period, using the second sequence (228),
wherein n and m are equal to or greater than the number of transmitters and the first and second sequences are different to each other and selected such that, independently of the synchronization of the transmitters, at least one of the n and/or m data packets is not disturbed by one of the data packets of the other transmitters, with the first and second repeat periods being equal.

2. Method according to claim 1, wherein
the number n of repetitions in the first sequence and the number m of repetitions in the second sequence are equal.

3. Device for transferring data to a receiver (150), comprising:
a first transmitter (110) implemented to transfer a first data packet (212) to the receiver (150) in a first sequence (218) defining the number of times n of the transfers of the first data packet (212) as well as a first series of time intervals between the transfers of the first data packet, and to transfer further data packets with a first repeat period, using the first sequence (218); and
a second transmitter (120) implemented to transfer a second data packet (222) to the receiver (150) in a second sequence (228) defining the number of times m of the transfers of the second data packet (222) as well as a second series of time intervals between the transfers of the second data packet, and to transfer further data packets with a second repeat period, using the second sequence (228),
wherein n and m are equal to or greater than the number of transmitters and the first and second sequences are different to each other and selected such that, independently of the synchronization of the transmitters, at least one of the n and/or m data packets is not disturbed by one of the data packets of the other transmitters, with the first and second repeat periods being equal.

4. Device according to claim 3, wherein the first and second transmitters are implemented such that the number n of the repetitions in the first sequence and the number m of the repetitions in the second sequence are equal.

5. Computer program with a program code for performing all of the steps of the method according to claim 1 when the computer program runs on a computer.

## Revendications

1. Procédé de transmission de données entre au moins deux émetteurs et un récepteur, aux étapes suivantes consistant à:
a) transmettre à plusieurs reprises un premier paquet de données (212) d'un premier (110) des émetteurs au récepteur (150) dans une première séquence (218) qui fixe le nombre de fois n de transmissions du premier paquet de données ainsi qu'une première succession d'intervalles de temps entre les transmissions du premier paquet de données;
b) transmettre à plusieurs reprises un deuxième paquet de données (222) d'un deuxième (120) des émetteurs au récepteur (150) dans une deuxième séquence (228) qui fixe le nombre de fois m de transmissions du deuxième paquet de données ainsi qu'une deuxième succession d'intervalles de temps entre les transmissions du deuxième paquet de données;
c) transmettre d'autres paquets de données avec une première durée de répétition à l'aide de la première séquence (218); et
d) transmettre d'autres paquets de données avec une deuxième durée de répétition à l'aide de la deuxième séquence (228),
n et m étant égaux ou supérieurs au nombre d'émetteurs et la première et la deuxième séquence étant différentes l'une de l'autre et choisies de sorte que, indépendamment de la synchronisation des émetteurs, au moins l'un des n ou m paquets de données ne soit pas perturbé par l'un des paquets de données des autres émetteurs, la première et la deuxième durée de répétition étant identiques.

2. Procédé selon la revendication 1,
le nombre n de répétitions dans la première séquence et le nombre m de répétitions dans la deuxième séquence étant égaux.

3. Dispositif de transmission de données à un récepteur (150), avec:
un premier émetteur (110) qui est réalisé de manière à transmettre un premier paquet de données (212) au récepteur (150) selon une première séquence (218) qui fixe le nombre de fois n de transmissions du premier paquet de données (212) ainsi qu'une première succession d'intervalles de temps entre les transmissions du premier paquet de données, et à transmettre d'autres paquets de données avec une première durée de répétition à l'aide de la première séquence (218); et
un deuxième émetteur (120) qui est réalisé de manière à transmettre un deuxième paquet de données (222) au récepteur (150) dans une deuxième séquence (228) qui fixe le nombre de fois m de transmissions du deuxième paquet de données (222) ainsi qu'une deuxième succession d'intervalles entre les transmission du deuxième paquet de données, et à transmettre d'autres paquets de données avec une deuxième durée de répétition à l'aide de la deuxième séquence (228),
n et m étant égaux ou supérieurs au nombre d'émetteurs et la première et la deuxième séquence étant différentes l'une de l'autre et choisies de sorte que, indépendamment de la synchronisation des émetteurs, au moins l'un des n ou m paquets de données ne soit pas perturbé par l'un des paquets de données des autres émetteurs, la première et la deuxième durée de répétition étant identiques.

4. Dispositif selon la revendication 3, dans lequel le premier et le deuxième émetteur sont réalisés de sorte que le nombre n de répétitions dans la première séquence et le nombre m de répétitions dans la deuxième séquence soient identiques.

5. Programme d'ordinateur avec un code de programme pour réaliser toutes les étapes du procédé selon la revendication 1 lorsque le programme d'ordinateur est exécuté sur un ordinateur.
